(19) Europäisches Patentamt
European Patent Office
Office européen des brevets

(11) **EP 1 788 467 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(51) Int Cl.:
**G05D 1/02** *(2006.01)* **G01S 17/93** *(2006.01)*
*G01S 17/36* *(2006.01)* *G01S 17/42* *(2006.01)*
*G01S 17/10* *(2006.01)*

(21) Anmeldenummer: **06018391.0**

(22) Anmeldetag: **02.09.2006**

(54) **Schutzeinrichtung**

Safety device

Dispositif de protection

(84) Benannte Vertragsstaaten:
**DE**

(30) Priorität: **15.11.2005 DE 102005054359**

(43) Veröffentlichungstag der Anmeldung:
**23.05.2007 Patentblatt 2007/21**

(73) Patentinhaber: **Leuze electronic GmbH + Co. KG**
**73277 Owen/Teck (DE)**

(72) Erfinder:
• **Brunner, Rolf**
  **82223 Eichenau (DE)**
• **Mohr, Stefan, Dr.**
  **80686 München (DE)**

(74) Vertreter: **Ruckh, Rainer Gerhard**
**Patentanwalt**
**Jurastrasse 1**
**73087 Bad Boll (DE)**

(56) Entgegenhaltungen:
**WO-A1-02/082201 DE-A1- 10 113 413**
**US-B1- 6 347 266**

• **DICKMANNS E D ED - INSTITUTE OF ELECTRICAL AND ELECTRONICS ENGINEERS: "An integrated approach to feature based dynamic vision", PROCEEDINGS OF THE CONFERENCE ON COMPUTER VISION AND PATTERN RECOGNITION. ANN ARBOR, JUNE 5 - 9, 19; [PROCEEDINGS OF THE CONFERENCE ON COMPUTER VISION AND PATTERN RECOGNITION], WASHINGTON, IEEE COMP. SOC. PRESS, US, vol. -, 5 June 1988 (1988-06-05), pages 820-825, XP010012940, DOI: 10.1109/CVPR.1988.196328 ISBN: 978-0-8186-0862-9**

**Beschreibung**

Die Erfindung betrifft eine Schutzeinrichtung gemäß dem Oberbegriff des Anspruchs 1.

Derartige berührungslos arbeitende Schutzeinrichtungen werden insbesondere im Bereich des Personenschutzes eingesetzt. Die in Rede stehende Schutzeinrichtung weist einen optischen Sensor auf, der an einem Fahrzeug, insbesondere an einem fahrerlosen Transportsystem angebracht ist. Diese Schutzeinrichtung stellt einen Kollisionsschutz derart dar, dass während der Fahrt des Fahrzeugs dessen Vorfeld mittels des optischen Sensors überwacht wird. Dabei wird mit dem optischen Sensor geprüft, ob innerhalb eines Schutzfelds ein Objekt detektiert wird. Ist dieses der Fall, wird im optischen Sensor ein Abschaltbefehl generiert, der das Fahrzeug zum Stillstand bringt. Damit wird eine Kollision des Fahrzeugs mit dem in das Schutzfeld eindringenden Objekt, insbesondere einer Person, in diesem Schutzfeld vermieden.

Ein Problem bei derartigen Systemen besteht darin, dass das Fahrzeug, insbesondere das fahrerlose Transportsystem, entlang vorgegebener Fahrtrouten bewegt wird, entlang derer sich die Umgebung fortlaufend ändern kann. Entsprechend der Umgebungsbedingungen und der Geschwindigkeit des Fahrzeugs muss, um einen sicheren Kollisionsschutz zu gewährleisten, das Schutzfeld unterschiedlich groß dimensioniert werden. Fährt beispielsweise das Fahrzeug mit großer Geschwindigkeit, ist das Schutzfeld aufgrund des entsprechend großen Bremswegs des Fahrzeugs möglichst groß zu dimensionieren, damit bei einer Objektdetektion im Schutzfeld das Fahrzeug noch rechtzeitig vor einer Kollision abgebremst und angehalten werden kann. Dagegen muss beispielsweise bei Durchfahrt einer Kurve, die von einer Wand oder dergleichen begrenzt ist, das Schutzfeld kleiner dimensioniert werden, damit die Wand außerhalb des Schutzfelds liegt. Andernfalls würde durch die Detektion der Wand innerhalb des Schutzfelds ein unnötiger Notstopp des Fahrzeugs ausgelöst.

Bei bekannten optischen Sensoren dieser Art kann diese Anforderung einer Schutzfeldanpassung prinzipiell dann nicht erfüllt werden, wenn in diesem ein Schutzfeld fest vorgegeben ist. Ein derartiger optischer Sensor ist beispielsweise aus der DE 39 32 344 A1 bekannt.

Aus der DE 199 15 509 A1 ist ein als Flächendistanzsensor ausgebildeter optischer Sensor bekannt, bei welchem eine Auswerteeinheit vorgegeben ist, in welcher mehrere Schutzfelder abgespeichert werden können. Mittels mehrerer Schalter können die Schutzfelder einzeln ausgewählt und aktiviert werden, so dass innerhalb des jeweils ausgewählten Schutzfelds eine Überwachung auf eindringende Objekte oder Personen erfolgen kann.

Die WO 02/082201 A1 betrifft ein Hinderniskontrollsystem für Kraftfahrzeuge. Dieses System umfasst ein Bildverarbeitungssystem mit einer 3D-Kamera, mittels dessen Entfernungsmessungen durchgeführt werden um Distanzen von Objekten zu dem Kraftfahrzeug zu ermitteln. Diese Objekterkennung erfolgt innerhalb eines Bereichs der durch einen Sicherheitsabstand begrenzt ist. Dieser Bereich wird fortlaufend anhand der Geschwindigkeit und Richtung des Fahrzeugs berechnet, wobei zur Ermittlung der Geschwindigkeit ein separater Geschwindigkeitssensor und zur Erfassung der Richtung ein Gyroskop als weiterer separater Sensor verwendet wird.

Die US 6 347 266 B1 betrifft ein Kollisionsschutzsystem für ein automatisches Fahrzeug. Dieses System weist einen Radarsensor auf, mittels dessen Distanzen von Objekten zum Fahrzeug erfasst werden. In Abhängigkeit eines Positionserfassungssensors wie einem GPS-System wird die Position des Fahrzeugs auf einem vorgegebenen Fahrzeug-Kurs bestimmt. In Abhängigkeit hiervon wird ein mit dem Fahrzeug-Kurs überlappender Bereich berechnet, der mit dem Radarsystem auf ein Eindringen von Objekten überwacht werden soll, wobei gegebenenfalls auch die Abstrahlrichtung des Radarsystems geändert wird, um diesen Bereich möglichst groß zu halten.

Die DE 101 13 413 A1 betrifft ein Verfahren zur Überwachung von Gefahrenbereichen von führerlosen, automatischen Transportsystemen. Zur Durchführung der Überwachung wird ein Helligkeitssensor mit einem CMOS- oder CCD-Array eingesetzt. Eine Objekterkennung erfolgt durch einen Vergleich aktueller mit dem Helligkeitssensor ermittelter Helligkeitswerte mit zuvor abgespeicherten Referenzwerten.

In DICKMANNS E D ED - INSTITUTE OF ELECTRICAL AND ELETRO-NICS ENGINEERS: "An integrated approach to feature based dynamic vision", PROCEEDINGS OF THE CONFERENCE ON COMPUTER VISION AND PATTERN RECOGNITION. ANN ARBOR, JUNE 5-9, 19; [PROCEEDINGS OF THE CONFERENCE ON COMPUTER VISION AND PATTERN RECOGNITION]; WASHINGTON, IEEE COMP. SOC. PRESS, US, Bd.-,5. Juni 1988 (1988-06-05), Seiten 820-825, XP010012940, DOI: 10.1109/CVPR. 1988.196328 ISBN: 978-0-8186-0862-9 (D4) ist ein Verfahren zur dynamischen, zeitabhängigen Analyse eines Raumbereiches beschrieben. Insbesondere wird mit einem auf einem Fahrzeug montierten Kamerasystem die sich ändernde Umgebung im dreidimensionalen Raum analysiert. Durch Analyse eines stationären Umfelds kann mittels partieller Differentialgleichungen die Bewegung des Fahrzeugs analysiert werden.

Ausgehend von diesem Stand der Technik liegt der Erfindung die Aufgabe zugrunde, eine Schutzeinrichtung der eingangs genannten Art bereitzustellen, mittels derer auch bei zeitlich sich ändernden Umgebungsbedingungen eine sichere Überwachung des Umfeldes eines Fahrzeugs ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Schutzeinrichtung für ein Fahrzeug mit einem an diesem angeordneten optischen Sensor zur Ortung von Objekten innerhalb eines Erfassungsbereichs. In dem optischen Sensor ist wenigstens ein innerhalb des Erfassungsbereichs liegendes Schutzfeld vorgegeben. Bei Detektion eines Objektes im Schutzfeld mittels des optischen Sensors wird von diesem ein Schaltsignal generiert. Durch Ortung von stationären Gegenständen mittels des optischen Sensors zu vorgegebenen Zeitpunkten sind die Fahrtrichtung und/oder Geschwindigkeit des Fahrzeugs als Messgrößen bestimmbar. In Abhängigkeit dieser Messgrößen im optischen Sensor wird aus mehreren abgespeicherten Schutzfeldern ein Schutzfeld ausgewählt, innerhalb dessen die Objektdetektion erfolgt, oder es erfolgt im optischen Sensor eine Gültigkeitsüberprüfung eines in diesen von einer Steuerung eingelesenen Schutzfelds und/oder Einstellwerts des Fahrzeugs.

Der Grundgedanke der Erfindung besteht somit darin, dass mit dem optischen Sensor der erfindungsgemäßen Schutzeinrichtung nicht nur eine Detektion von Objekten innerhalb eines Schutzfelds erfolgt, um so einen Kollisionsschutz bei der Fahrt des Fahrzeugs zu gewährleisten. Vielmehr wird durch die fortlaufende Erfassung der Umgebung des Fahrzeugs mit dem optischen Sensor auch die Fahrtrichtung und Geschwindigkeit des Fahrzeugs ermittelt, so dass in Abhängigkeit dieser Messgrößen eine Auswahl und Aktivierung eines aktuellen Schutzfelds durchgeführt werden kann, welches an die Umgebungsbedingungen optimal angepasst ist. Der Kollisionsschutz für das Fahrzeug wird somit mit einem an die Umgebungsbedingungen und Parameter des Fahrzeugs angepassten Schutzfeld durchgeführt.

Ein wesentlicher Vorteil der erfindungsgemäßen Schutzeinrichtung besteht darin, dass zur aktuellen Auswahl des Schutzfelds, innerhalb derer die Objektdetektion für die Durchführung des Kollisionsschutzes für das Fahrzeug erfolgt, keine externen Sensoren oder dergleichen benötigt werden. Vielmehr werden die Kriterien für die Auswahl des aktuellen Schutzfelds im jeweiligen optischen Sensor selbst generiert. Weiterhin ist vorteilhaft, dass zur Bestimmung der Fahrtrichtung oder Geschwindigkeit des Fahrzeugs keine aufwendige Präparation der Umgebung durchgeführt werden muss. Auch ist keine fortlaufende Absolutortsbestimmung des Fahrzeugs notwendig. Vielmehr ist zur Bestimmung der relevanten Messgrößen nur eine fortlaufende Abtastung von stationären Gegenständen mittels des optischen Sensors erforderlich. Durch diese fortlaufende Abtastung kann der zeitliche Verlauf des Verschiebungsvektors des Fahrzeugs relativ zu diesen Gegenständen ermittelt werden, aus welchen dann die Fahrtrichtung und Geschwindigkeit des Fahrzeugs bestimmt werden kann. Besonders vorteilhaft können dabei in der Schutzeinrichtung stationäre Gegenstände von sich bewegenden Gegenständen unterschieden werden, so dass dann nur stationäre Gegenstände für die weitere Auswertung zur Bestimmung der Fahrtrichtung und Geschwindigkeit des Fahrzeugs herangezogen werden.

In einem Einlernvorgang werden vorteilhaft vor Inbetriebnahme der Schutzeinrichtung Zuordnungen der einzelnen Schutzfelder zu vorgegebenen Fahrtrichtungen und Geschwindigkeiten, die das Fahrzeug während der auf die Inbetriebnahme folgenden Betriebsphase durchläuft, im optischen Sensor hinterlegt.

Gemäß einer ersten Variante der Erfindung wird dann während der Betriebsphase der Schutzeinrichtung in dem optischen Sensor aus dort abgespeicherten Schutzfeldern in Abhängigkeit der aktuellen ermittelten Fahrtrichtung und/oder Geschwindigkeit das aktuelle Schutzfeld ausgewählt, mit welchem die Kollisionsüberwachung für das Fahrzeug durchgeführt wird.

Gemäß einer zweiten Variante der Erfindung erfolgt die Vorgabe des aktuellen Schutzfelds, innerhalb dessen mittels des optischen Sensors die Kollisionsüberwachung durchgeführt wird, durch die Steuerung des Fahrzeugs. In diesem Fall kontrolliert der optische Sensor anhand der vor Inbetriebnahme eingelesenen Werte, ob von der Steuerung ein gültiges Schutzfeld eingelesen wurde und generiert als Schaltsignal einen Abschaltbefehl für das Fahrzeug, falls kein gültiges Schutzfeld vorliegt. Diese Variante kann vorteilhaft dadurch erweitert werden, dass alternativ oder zusätzlich von der Steuerung eingelesene Einstellwerte für das Fahrzeug, wie der Stillstand oder die Maximalgeschwindigkeit das Fahrzeugs, im optischen Sensor auf ihre Gültigkeit überprüft werden.

Die Kollisionsüberwachung mittels des optischen Sensors erfolgt generell derart, dass bei Detektion eines Objekts im aktuellen Schutzfeld ein Schaltsignal generiert wird, das insbesondere als Abschaltbefehl für das Fahrzeug ausgebildet ist.

Die Kollisionsüberwachung kann generell derart erweitert sein, dass mit dem optischen Sensor nicht nur eine Detektion von Objekten in dem aktuellen Schutzfeld durchgeführt wird, wobei das Schutzfeld vorteilhaft das unmittelbare Vorfeld des Fahrzeugs umfasst. An das Schutzfeld kann besonders vorteilhaft zu größeren Distanzen zum Fahrzeug ein Warnfeld anschließen. Wird in einem solchen Warnfeld vom optischen Sensor ein Objekt detektiert, generiert der optische Sensor keinen Abschaltbefehl für das Fahrzeug sondern ein Alarmsignal in Form einer akustischen oder optischen Warnmeldung. Dringt eine Person in das Warnfeld ein, so wird sie durch das Alarmsignal gewarnt und kann den Bereich vor dem Fahrzeug rechtzeitig verlassen, bevor sie in das Schutzfeld eindringt und so einen Notstopp des Fahrzeugs auslöst. Diese Warnfelder können bevorzugt jeweils zusammen mit dem jeweiligen Schutzfeld ausgewählt und aktiviert werden.

Der optische Sensor kann gemäß einer ersten Variante als Empfängersystem eine Kamera aufweisen, die als distanzmessendes System ausgebildet ist. Dieser Kamera kann eine Beleuchtungseinheit zugeordnet sein. Alternativ kann der Kamera ein Sender zugeordnet sein, wobei die vom Sender emittierten Sendelichtstrahlen über eine Umlenkeinheit zur Generierung eines Scanmusters periodisch abgelenkt werden.

Gemäß einer weiteren Variante kann der optische Sensor als Flächendistanzsensor, das heißt als scannender Distanzsensor ausgebildet sein.

Generell weist der optische Sensor bevorzugt eine redundant aufgebaute Auswerteeinheit zur Signalauswertung auf, so dass der optische Sensor die Sicherheitsanforderungen zum Einsatz im Personenschutz erfüllt. Insbesondere kann die Auswerteeinheit einen redundanten, zweikanaligen Aufbau mit zwei sich gegenseitig überwachenden Mikroprozessoren aufweisen.

Die Erfindung wird im Nachstehenden anhand der Zeichnungen erläutert. Es zeigen:

Figur 1: Ausführungsbeispiel eines optischen Sensors.

Figur 2: Schematische Darstellung eines Fahrzeugs mit einem optischen Sensor gemäß Figur 1 als berührungslos arbeitende Schutzeinrichtung.

Figur 3: Schematische Darstellung des Fahrzeugs gemäß Figur 2 während zwei aufeinander folgenden Zeitpunkten bei der Vorbeifahrt an stationären Gegenständen.

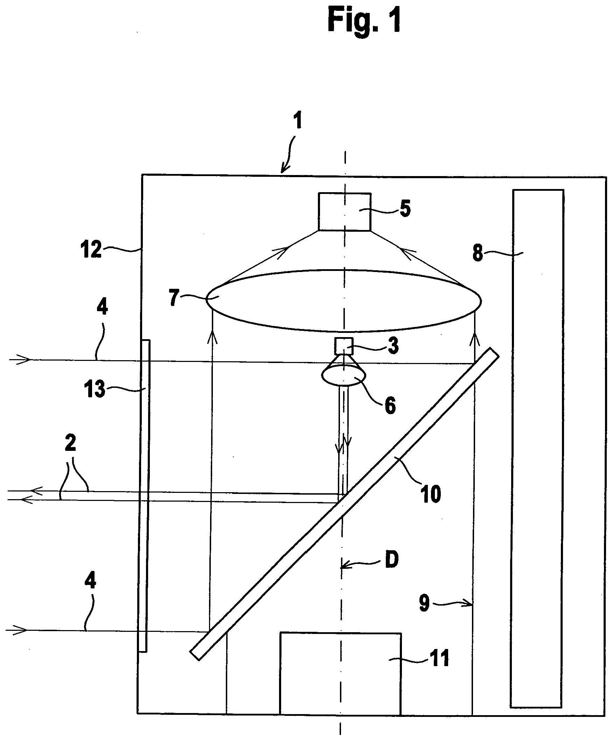

Figur 1 zeigt einen als Flächendistanzsensor ausgebildeten optischen Sensor 1. Der optische Sensor 1 weist einen Distanzsensor mit einem Sendelichtstrahlen 2 emittierenden Sender 3 und einem Empfangslichtstrahlen 4 empfangenden Empfänger 5 auf. Der Sender 3 besteht vorzugsweise aus einer Laserdiode, welcher zur Strahlformung der Sendelichtstrahlen 2 eine Sendeoptik 6 nachgeordnet ist. Der Empfänger 5 ist beispielsweise von einer pin-Photodiode oder besonders vorteilhaft von einer Avalanche-Photodiode gebildet, welcher eine Empfangsoptik 7 vorgeordnet ist.

Die Distanzmessung kann zum einen nach dem Prinzip der Phasenmessung erfolgen. In diesem Fall wird die Laserdiode im CW-Betrieb betrieben, wobei den Sendelichtstrahlen 2 eine Amplitudenmodulation aufgeprägt ist. Empfangsseitig wird die Distanzinformation durch einen Vergleich der Phasenlagen der emittierten Sendelichtstrahlen 2 und der von einem Objekt zurückreflektierten und auf den Empfänger 5 auftreffenden Empfangslichtstrahlen 4 ermittelt. Diese Auswertung erfolgt in einer Auswerteeinheit 8, an welche der Sender 3 und der Empfänger 5 über nicht dargestellte Zuleitungen angeschlossen sind.

Alternativ kann die Distanzmessung auch nach der Impulslaufzeitmethode erfolgen. In diesem Fall werden vom Sender 3 kurze Sendelichtimpulse emittiert. Die Distanzinformation wird in diesem Fall durch direkte Messung der Laufzeit eines Sendelichtimpulses zu einem Objekt und zurück zum Empfänger 5 gewonnen.

Die Sende- 2 und Empfangslichtstrahlen 4 sind über eine Ablenkeinheit 9 geführt. Die Ablenkeinheit 9 weist einen Ablenkspiegel 10 auf, welcher auf einem drehbaren Halter angebracht ist, der über einen Motor 11 angetrieben wird. Der Ablenkspiegel 10 rotiert dadurch mit einer vorgegebenen Drehzahl um eine vertikale Drehachse D. Der optische Sensor 1 ist in einem Gehäuse 12 integriert, in dessen Frontwand ein Austrittsfenster 13 integriert ist, durch welches die Sendelichtstrahlen 2 und die Empfangslichtstrahlen 4 geführt sind. Zur Erfassung der Position der Objekte wird mittels eines nicht dargestellten, an die Auswerteeinheit 8 angeschlossenen Winkelgebers fortlaufend die aktuelle Winkelposition der Ablenkeinheit 9 erfasst. Aus der Winkelposition und dem in dieser Winkelposition registrierten Distanzwert wird in der Auswerteeinheit 8 die Position eines Objektes bestimmt.

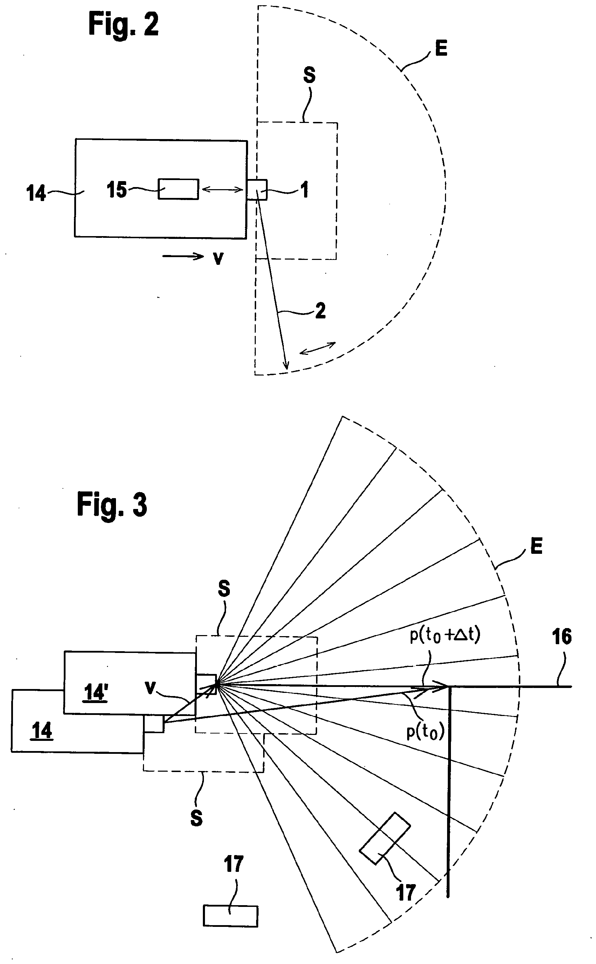

Figur 2 zeigt ein Fahrzeug 14, welches im vorliegenden Fall von einem fahrerlosen Transportsystem gebildet ist. Derartige fahrerlose Transportsysteme werden zum Transport von Lasten in Fabrikhallen und dergleichen entlang vorgegebener Fahrtrouten verfahren. Die Fahrtrichtung des fahrerlosen Transportsystems ist in Figur 2 mit einem Pfeil gekennzeichnet. Die Geschwindigkeit des fahrerlosen Transportsystems ist mit v bezeichnet. Das fahrerlose Transportsystem wird dabei von einer Steuerung 15 gesteuert. Da das fahrerlose Transportsystem ohne Fahrer entlang der Fahrstrecke fährt, ist es erforderlich, eine automatisierte Kollisionsüberwachung durchzuführen. Zur Durchführung einer derartigen Kollisionsüberwachung ist als berührungslos wirkende Schutzeinrichtung ein optischer Sensor 1 an der Front des fahrerlosen Transportsystems montiert, der an die Steuerung 15 angeschlossen ist.

Wie in Figur 2 veranschaulicht werden die Sendelichtstrahlen 2 des optischen Sensors 1 periodisch in einer Halbebene geführt, welche den Erfassungsbereich E bildet, innerhalb dessen mit dem optischen Sensor 1 Objekte detektiert und geortet werden können. Dieser in horizontaler Richtung verlaufende Erfassungsbereich E schließt an die Front des fahrerlosen Transportsystems an und erstreckt sich über das Vorfeld des fahrerlosen Transportsystems.

Die Kollisionsüberwachung mittels des optischen Sensors 1 erfolgt dadurch, dass mit diesem das Eindringen von Objekten in ein Schutzfeld S überwacht wird. Das Schutzfeld S bildet einen Ausschnitt des vom optischen Sensor 1 erfassten Erfassungsbereichs E. Das in Figur 2 dargestellte Schutzfeld S weist eine rechteckige Kontur auf, dessen Breite an die Breite des fahrerlosen Transportsystems angepasst ist.

Wird vom optischen Sensor 1 innerhalb des Schutzfelds S ein Objekt, beziehungsweise eine Person erkannt, wird im optischen Sensor 1 ein Schaltsignal generiert. Das Schaltsignal ist in diesem Fall als Abschaltbefehl für das fahrerlose Transportsystem ausgebildet, der in die Steuerung 15 des fahrerlosen Transportsystems eingelesen wird. Durch den Abschaltbefehl wird das fahrerlose Transportsystem angehalten. Das Schutzfeld S ist so dimensioniert, dass bei Eindringen eines Objekts oder einer Person in dieses Schutzfeld durch die Generierung des Abschaltbefehls das fahrerlose Transportsystem rechtzeitig zum Stillstand gebracht werden kann, um eine Kollision mit der Person oder dem Objekt zu vermeiden.

Das fahrerlose Transportsystem wird zur Durchführung von Transportvorgängen mit einem vorgegebenen Geschwindigkeitsprofil entlang einer vorgegebenen Fahrtroute geführt. Um einen optimalen Kollisionsschutz zu gewährleisten, ist das Schutzfeld S hinsichtlich seiner Geometrie und Größe an die sich dabei ändernden Umgebungsbedingungen anzupassen.

Diese Schutzfeldanpassung wird selbsttätig im optischen Sensor 1 vorgenommen oder in diesem kontrolliert. Zur Durchführung dieser Kontrollfunktion wird von der Steuerung vor Inbetriebnahme der Schutzeinrichtung und vor der Fahrt des fahrerlosen Transportsystems das dynamische Verhalten des fahrerlosen Transportsystems als Einlemparameter in den optischen Sensor 1 eingegeben. Hierbei werden in den optischen Sensor 1 das Geschwindigkeitsprofil des fahrerlosen Transportsystems, dessen Stillstände und dessen Maximalgeschwindigkeit als Einstellwerte eingelesen. Dabei werden diesen Parametern die jeweils geeigneten Schutzfelder zugeordnet und ebenfalls in den optischen Sensor 1 eingelesen.

Während der auf diesen Einlernvorgang folgenden Betriebsphase wird mit dem optischen Sensor 1 fortlaufend die aktuelle Fahrtrichtung und Geschwindigkeit des fahrerlosen Transportsystems ermittelt. Figur 3 zeigt schematisch das Funktionsprinzip, das zur Ermittlung dieser Daten angewendet wird. In Figur 3 ist mit der Bezugsziffer 14 das Fahrzeug in Form des fahrerlosen Transportsystems zu einem Zeitpunkt $t = t_O$ dargestellt. Weiterhin ist in Figur 3 dasselbe Fahrzeug zu einem späteren Zeitpunkt $t = t_O + \Delta t$ dargestellt und mit der Bezugsziffer 14' bezeichnet. Zu jedem dieser Zeitpunkte wird innerhalb des Schutzfelds S mittels des optischen Sensors 1 eine Kollisionsüberwachung durchgeführt. Gleichzeitig wird mittels des optischen Sensors 1 durch fortlaufendes Registrieren stationärer Gegenstände, die außerhalb des Schutzfelds S, aber noch innerhalb des Erfassungsbereichs E liegen, die Fahrtrichtung und Geschwindigkeit des fahrerlosen Transportsystems bestimmt.

Wie aus Figur 3 ersichtlich, ist ein derartiger Gegenstand von einer Wand 16 gebildet, auf welche sich das fahrerlose Transportsystem zu bewegt. Weitere stationäre Gegenstände sind von Markierungen bildenden Reflektoren 17 gebildet, welche die Fahrbahn des fahrerlosen Transportsystems im Bereich vor der Wand 16 seitlich begrenzen. Zur Bestimmung der Geschwindigkeit und der Fahrtrichtung des fahrerlosen Transportsystems werden die Positionen dieser stationären Gegenstände vom optischen Sensor 1 fortlaufend erfasst.

Dies ist in Figur 3 anhand der Detektion der Kante der Wand 16 veranschaulicht. Zum Zeitpunkt $t = t_O$ befindet sich das fahrerlose Transportsystem noch frontal vor der Wand 16. Vom optischen Sensor wird zu diesem Zeitpunkt die Position $p(t_O)$ der Kante der Wand 16 zum optischen Sensor 1 registriert. Zum Zeitpunkt $t = t_O + \Delta t$ ist das fahrerlose Transportsystem zur Umfahrung der Wand 16 seitlich nach vorne bewegt. Vom optischen Sensor 1 wird zu diesem Zeitpunkt die Position $p(t_O + \Delta t)$ registriert.

Durch Bilden der Differenz

$$R = p(t_O + \Delta t) - p(t)$$

wird im optischen Sensor die Fahrtrichtung des fahrerlosen Transportsystems bestimmt. Durch Bildung des Quotienten

$$v = (p(t_O + \Delta t) - p(t_O)) / \Delta t$$

wird im optischen Sensor 1 die Geschwindigkeit des fahrerlosen Transportsystems bestimmt.

Generell wird durch eine fortlaufende Positionsbestimmung von stationären Gegenständen außerhalb des Schutzfelds S die Fahrtrichtung und Geschwindigkeit des fahrerlosen Transportsystems bestimmt.

Gemäß einer ersten Variante wird im optischen Sensor 1 selbst anhand der ermittelten Fahrtrichtung und Geschwindigkeit aus einer Anzahl von abgespeicherten Schutzfeldern das aktuelle Schutzfeld S ausgewählt, in welchem die Kollisionsüberwachung mittels des optischen Sensors 1 durchgeführt wird.

Wie aus Figur 3 ersichtlich, ist die Größe des Schutzfelds S kleiner als der Abstand des optischen Sensors 1 zur Wand 16. Daher bleibt zur Zeit $t = t_O + \Delta t$ ebenso wie zur Zeit $t = t_O$ dasselbe Schutzfeld S aktiviert. Sobald sich das fahrerlose Transportsystem jedoch weiter der Wand 16 nähert, wird durch Detektion der Kante der Wand 16 im optischen Sensor 1 bei Annäherung des fahrerlosen Transportsystems dessen Geschwindigkeit reduziert und dann selbsttätig ein kleines Schutzfeld ausgewählt, so dass gewährleistet ist, dass bei der Vorbeifahrt des fahrerlosen Transportsystems an der Wand 16 diese außerhalb des aktuellen Schutzfelds S liegt.

Generell wird durch die im Einlernvorgang hinterlegten Zuordnungen der Schutzfelder zu den dem Geschwindigkeitsprofil entsprechenden Fahrtrichtungen und Geschwindigkeiten durch den optischen Sensor in Abhängigkeit der aktuell registrierten Fahrtrichtung und Geschwindigkeit und dem Vergleich mit den eingelernten Werten das jeweils geeignete Schutzfeld S ausgewählt.

Bei dieser Variante bildet der optische Sensor 1 eine von der Steuerung 15 völlig unabhängige Einheit. Die Auswahl der aktuellen Schutzfelder erfolgt allein im optischen Sensor 1. Auch die Kollisionsüberwachung erfolgt vollständig im optischen Sensor 1. Der optische Sensor 1 gibt lediglich als Ausgangsgröße das Schaltsignal an die Steuerung 15 aus, so dass bei einer Objektdetektion im Schutzfeld S das fahrerlose Transportsystem angehalten wird.

Gemäß einer zweiten Variante erfolgt die Vorgabe der aktuellen Schutzfelder für den optischen Sensor 1 durch die Steuerung 15, so dass insoweit auch die Steuerung 15 Funktionen der berührungslos arbeitenden Schutzeinrichtung übernimmt. Durch Vergleich der aktuell ermittelten Werte der Fahrtrichtung und Geschwindigkeit mit den beim Einlernvorgang eingelernten Werten, wird im optischen Sensor 1 lediglich eine Gültigkeitsüberprüfung der eingelernten Schutzfelder durchgeführt. Wird das Schutzfeld im optischen Sensor 1 als gültig erkannt, wird dieses im optischen Sensor 1 freigegeben, so dass innerhalb dieses Schutzfelds S vom optischen Sensor 1 das Eindringen von Objekten überprüft wird. Wird das Schutzfeld im optischen Sensor 1 als ungültig erkannt, wird im optischen Sensor ein Abschaltbefehl generiert, so dass das fahrerlose Transportsystem einen Notstopp durchführt.

Diese Auswertung kann dahingehend erweitert werden, dass im optischen Sensor 1 auch die von der Steuerung 15 vorgegebenen Stillstände und Maximalgeschwindigkeiten des fahrerlosen Transportsystems kontrolliert werden.

Bezugszeichenliste

| | |
|---|---|
| (1) | optischer Sensor |
| (2) | Sendelichtstrahlen |
| (3) | Sender |
| (4) | Empfangslichtstrahlen |
| (5) | Empfänger |
| (6) | Sendeoptik |
| (7) | Empfangsoptik |
| (8) | Auswerteeinheit |
| (9) | Ablenkeinheit |
| (10) | Ablenkspiegel |
| (11) | Motor |
| (12) | Gehäuse |
| (13) | Austrittsfenster |
| (14) | Fahrzeug |
| (14') | Fahrzeug |
| (15) | Steuerung |
| (16) | Wand |
| (17) | Reflektor |
| (D) | Drehachse |
| (E) | Erfassungsbereich |
| (S) | Schutzfeld |

**Patentansprüche**

**1.** Schutzeinrichtung für ein Fahrzeug mit einem an diesem angeordneten optischen Sensor (1) zur Ortung von Objekten innerhalb eines Erfassungsbereichs (E), wobei in dem optischen Sensor (1) wenigstens ein innerhalb des Erfassungsbereichs (E) liegendes Schutzfeld (S) vorgegeben ist, wobei bei Detektion eines Objektes im Schutzfeld (S) mittels des optischen Sensors (1) von diesem ein Schaltsignal generiert wird, **dadurch gekennzeichnet, dass** durch Ortung von stationären Gegenständen mittels des optischen Sensors (1) zu vorgegebenen Zeitpunkten die Fahrtrichtung und/oder Geschwindigkeit des Fahrzeugs (14) als Messgrößen bestimmbar sind, und dass in Abhängigkeit dieser Messgrößen im optischen Sensor (1) aus mehreren abgespeicherten Schutzfeldern ein Schutzfeld (S) ausgewählt wird, innerhalb dessen die Objektdetektion erfolgt, oder im optischen Sensor (1) eine Gültigkeitsüberprüfung eines in diesen von einer Steuerung (15) eingelesenen Schutzfelds (S) und/oder Einstellwerts des Fahrzeugs (14) erfolgt.

**2.** Schutzeinrichtung nach Anspruch 1, **dadurch gekennzeichnet, dass** bei Detektion eines Objektes innerhalb des Schutzfelds (S) mittels des optischen Sensors (1) als Schaltsignal ein Abschaltbefehl generiert wird, mittels dessen das Fahrzeug (14) angehalten wird.

**3.** Schutzeinrichtung nach Anspruch 2, **dadurch gekennzeichnet, dass** im optischen Sensor (1) bei einem von der Steuerung (15) eingelesenen und als ungültig erkannten Schutzfeld (S) oder Einstellwert ein Abschaltbefehl generiert wird, mittels dessen das Fahrzeug (14) angehalten wird.

**4.** Schutzeinrichtung nach einem der Ansprüche 1 bis 3, **dadurch gekennzeichnet, dass** vor deren Inbetriebnahme vorgegebene Fahrtrichtungen und Geschwindigkeiten für das Fahrzeug (14) und diesen zugeordnete Schutzfelder und Einstellwerte in den optischen Sensor (1) eingelesen werden.

**5.** Schutzeinrichtung nach einem der Ansprüche 1 bis 4, **dadurch gekennzeichnet, dass** als Einstellwerte die Maximalgeschwindigkeit und der Stillstand des Fahrzeugs (14) vorgebbar sind.

**6.** Schutzeinrichtung nach einem der Ansprüche 1 bis 5, **dadurch gekennzeichnet, dass** dem Schutzfeld (S) wenigstens ein Warnfeld zugeordnet ist, wobei bei Detektion eines Objekts im Warnfeld ein Alarmsignal generiert wird.

**7.** Schutzeinrichtung nach Anspruch 6, **dadurch gekennzeichnet, dass** sich das Schutzfeld (S) über das Vorfeld vor dem Fahrzeug (14) erstreckt, und dass das Warnfeld an das Schutzfeld (S) zu größeren Distanzen zum Fahrzeug (14) anschließt.

**8.** Schutzeinrichtung nach einem der Ansprüche 6 oder 7, **dadurch gekennzeichnet, dass** im optischen Sensor (1) mit einem Schutzfeld (S) das zugehörige Warnfeld auswählbar ist oder von der Steuerung (15) das Schutzfeld (S) mit dem zugehörigen Warnfeld einlesbar ist.

**9.** Schutzeinrichtung nach einem der Ansprüche 1 bis 8, **dadurch gekennzeichnet, dass** die stationären Gegenstände von Markierungen gebildet sind.

**10.** Schutzeinrichtung nach einem der Ansprüche 1 bis 9, **dadurch gekennzeichnet, dass** mit dieser stationäre Gegenstände von sich bewegenden Gegenständen unterscheidbar sind.

**11.** Schutzeinrichtung nach einem der Ansprüche 1 bis 10, **dadurch gekennzeichnet, dass** der optische Sensor (1) eine Kamera aufweist.

**12.** Schutzeinrichtung nach Anspruch 11, **dadurch gekennzeichnet, dass** der optische Sensor (1) einer der Kamera zugeordnete Beleuchtungseinheit aufweist.

**13.** Schutzeinrichtung nach Anspruch 12, **dadurch gekennzeichnet, dass** der optische Sensor (1) einen der Kamera zugeordneten Sender (3) aufweist, wobei vom Sender (3) emittierte Sendelichtstrahlen (2) über eine Umlenkeinheit (9) abgelenkt sind.

**14.** Schutzeinrichtung nach einem der Ansprüche 1 bis 10, **dadurch gekennzeichnet, dass** der optische Sensor (1) als Flächendistanzsensor ausgebildet ist.

**15.** Schutzeinrichtung nach Anspruch 14, **dadurch gekennzeichnet, dass** der optische Sensor (1) einen Distanzsensor mit einem Sendelichtstrahlen (2) emittierenden Sender (3) und einem Empfangslichtstrahlen (4) empfangenden Empfänger (5) aufweist, wobei die Sendelichtstrahlen (2) mittels einer Ablenkeinheit (9) abgelenkt werden, so dass diese periodisch den Erfassungsbereich (E) überstreichen.

**16.** Schutzeinrichtung nach Anspruch 15, **dadurch gekennzeichnet, dass** der Erfassungsbereich (E) in einer Ebene liegt.

**17.** Schutzeinrichtung nach einem der Ansprüche 1 bis 16, **dadurch gekennzeichnet, dass** der optische Sensor (1) eine redundante Auswerteeinheit (8) aufweist.

**18.** Schutzeinrichtung nach einem der Ansprüche 1 bis 17, **dadurch gekennzeichnet, dass** mittels der Steuerung (15) das Fahrzeug (14) steuerbar ist.

**19.** Schutzeinrichtung nach einem der Ansprüche 1 bis 18, **dadurch gekennzeichnet, dass** das Fahrzeug (14) ein fahrerloses Transportsystem ist.

**Claims**

**1.** A safety device for a vehicle having an optical sensor (1) arranged thereon for locating objects within a detection region (E), at least one safety field (S) lying within the detection region (E) being predetermined in the optical sensor (1), a switching signal being generated by the optical sensor (1) when an object is detected in the safety field (S) by means of the optical sensor (1), **characterised in that** the optical sensor (1) has an optical sensor (1) which is arranged thereon and is arranged in the optical sensor (1) for locating objects within a detection region (E), **in that** the direction of travel and/or speed of the vehicle (14) can be determined as measured variables by locating stationary objects by means of the optical sensor (1) at predefined points in time, and **in that** a safety field (S), within which the object is detected, is selected from a plurality of stored safety fields in the optical sensor (1) as a function of these measured variables, or a validity check of a safety field (S) and/or setting value of the vehicle (14) read into the safety field (S) by a controller (15) is carried out in the optical sensor (1).

**2.** A safety device according to claim 1, **characterised in that**, when an object is detected within the safety field (S) by means of the optical sensor (1), a switch-off command is generated as a switching signal, by means of which switch-off command the vehicle (14) is stopped.

**3.** A safety device according to claim 2, **characterised in that** a switch-off command is generated in the optical sensor (1) for a safety field (S) or setting value which is read in by the controller (15) and recognised as invalid and by means of which the vehicle (14) is stopped.

**4.** A safety device in accordance with one of claims 1 to 3, **characterised in that**, before the vehicle (14) is put into operation, predetermined directions of travel and speeds for the vehicle (14) and safety fields and setting values associated therewith are read into the optical sensor (1).

**5.** A safety device according to one of claims 1 to 4, **characterised in that** the maximum speed and the standstill of the vehicle (14) can be preset as setting values.

**6.** A safety device according to one of claims 1 to 5, **characterised in that** at least one warning field is assigned to the safety field (S), an alarm signal being generated when an object is detected in the warning field.

7. A safety device according to claim 6, **characterised in that** the safety field (S) extends over the apron in front of the vehicle (14), and **in that** the warning field adjoins the safety field (S) at greater distances from the vehicle (14).

8. A safety device in accordance with one of claims 6 or 7, **characterised in that** the associated warning field can be selected in the optical sensor (1) with a safety field (S) or the safety field (S) with the associated warning field can be read in by the controller (15).

9. A safety device in accordance with one of claims 1 to 8, **characterised in that** the stationary objects are formed by markings.

10. A safety device in accordance with one of claims 1 to 9, **characterised in that** stationary objects can be distinguished from moving objects by means of said safety device.

11. A safety device according to one of claims 1 to 10, **characterised in that** the optical sensor (1) has a camera.

12. A safety device according to claim 11, **characterised in that** the optical sensor (1) has an illumination unit assigned to the camera.

13. A safety device according to Claim 12, **characterised in that** the optical sensor (1) has a transmitter (3) assigned to the camera, transmission light beams (2) emitted by the transmitter (3) being deflected via a deflection unit (9).

14. A safety device in accordance with one of claims 1 to 10, **characterised in that** the optical sensor (1) is designed as a surface distance sensor.

15. A safety device according to claim 14, **characterised in that** the optical sensor (1) has a distance sensor with a transmitter (3) emitting transmitted light beams (2) and a receiver (5) receiving received light beams (4), the transmitted light beams (2) being deflected by means of a deflection unit (9) so that they periodically sweep the detection region (E).

16. A safety device according to claim 15, **characterised in that** the detection region (E) lies in one plane.

17. A safety device according to one of claims 1 to 16, **characterised in that** the optical sensor (1) has a redundant evaluation unit (8).

18. A safety device in accordance with one of claims 1 to 17, **characterised in that** the vehicle (14) can be controlled by means of the controller (15).

19. A safety device according to one of claims 1 to 18, **characterised in that** the vehicle (14) is a driverless transport system.

**Revendications**

1. Dispositif de protection pour un véhicule comportant un capteur optique (1) disposé sur celui-ci pour localiser des objets dans une zone de détection (E), au moins une zone de protection (S) située dans la zone de détection (E) étant prédéterminée dans le capteur optique (1), un signal de commutation étant généré par le capteur optique (1) quand un objet est détecté dans la zone de protection (S) par le capteur optique (1), **caractérisé en ce que** le capteur optique (1) comporte un capteur optique (1) qui est disposé sur celui-ci et est agencé dans le capteur optique (1) pour localiser des objets dans une zone de détection (E), **en ce que** le sens de marche et/ou la vitesse du véhicule (14) peuvent être déterminés en tant que grandeurs de mesure par localisation d'objets stationnaires au moyen du capteur optique (1) à des moments prédéfinis, et **en ce qu'**un champ de protection (S), dans lequel l'objet est détecté, est sélectionné parmi plusieurs champs de protection enregistrés dans le capteur optique (1), en fonction de ces grandeur de mesure ou un contrôle de validité d'un champ de protection (S) et/ou de la valeur de réglage du véhicule (14) lue par un régulateur (15) dans le champ de protection (S) est effectué dans le capteur optique (1).

2. Dispositif de protection selon la revendication 1, **caractérisé en ce que**, lorsqu'un objet est détecté dans le champ de protection (S) au moyen du capteur optique (1), une commande d'arrêt est générée comme signal de commutation, au moyen de laquelle la commande d'arrêt du véhicule (14) est arrêtée.

3. Dispositif de protection selon la revendication 2, **caractérisé en ce qu'**un ordre d'arrêt est généré dans le capteur optique (1) pour un champ de protection (S) ou une valeur de réglage qui est lu par le régulateur (15) et reconnu comme invalide et par lequel le véhicule (14) est arrêté.

4. Dispositif de protection selon l'une des revendications 1 à 3, **caractérisé en ce que**, avant la mise en service du véhicule (14), des sens de marche et des vitesses prédéterminés pour le véhicule (14) et les champs de protection et les valeurs de réglage qui leur sont associés sont lus par le capteur optique (1).

**5.** Dispositif de protection selon l'une des revendications 1 à 4, **caractérisé en ce que** la vitesse maximale et l'arrêt du véhicule (14) peuvent être prédéfinis comme valeurs de réglage.

**6.** Dispositif de protection selon l'une des revendications 1 à 5, **caractérisé en ce qu'**au moins un champ d'alerte est affecté au champ de protection (S), un signal d'alarme étant généré lorsqu'un objet est détecté dans le champ d'alerte.

**7.** Dispositif de protection selon la revendication 6, **caractérisé en ce que** le champ de protection (S) s'étend sur le tablier devant le véhicule (14) et **en ce que** le champ d'alerte est adjacent au champ de protection (S) à de plus grandes distances du véhicule (14).

**8.** Dispositif de protection selon l'une des revendications 6 ou 7, **caractérisé en ce que** le champ d'alerte associé peut être sélectionné dans le capteur optique (1) avec un champ de protection (S) ou le champ de protection (S) avec le champ d'alerte associé peut être lu par le régulateur (15).

**9.** Dispositif de protection selon l'une des revendications 1 à 8, **caractérisé en ce que** les objets stationnaires sont constitués de repères.

**10.** Dispositif de protection selon l'une des revendications 1 à 9, **caractérisé en ce que** des objets stationnaires peuvent être distingués d'objets mobiles au moyen dudit dispositif de protection.

**11.** Dispositif de protection selon l'une des revendications 1 à 10, **caractérisé en ce que** le capteur optique (1) comporte une caméra.

**12.** Dispositif de protection selon la revendication 11, **caractérisé en ce que** le capteur optique (1) comporte une unité d'éclairage associée à la caméra.

**13.** Dispositif de protection selon la revendication 12, **caractérisé en ce que** le capteur optique (1) comporte un émetteur (3) affecté à la caméra, des faisceaux lumineux de transmission (2) émis par l'émetteur (3) étant déviés par une unité de déviation (9).

**14.** Dispositif de protection selon l'une des revendications 1 à 10, **caractérisé en ce que** le capteur optique (1) est conçu comme capteur de distance de surface.

**15.** Dispositif de protection selon la revendication 14, **caractérisé en ce que** le capteur optique (1) présente un capteur de distance avec un émetteur (3) émettant des faisceaux lumineux transmis (2) et un récepteur (5) recevant des faisceaux lumineux reçus (4), les faisceaux lumineux transmis (2) étant déviés par une unité de déviation (9) afin qu'ils balayent périodiquement la zone de détection (E).

**16.** Dispositif de protection selon la revendication 15, **caractérisé en ce que** la zone de détection (E) se trouve dans un plan.

**17.** Dispositif de protection selon l'une des revendications 1 à 16, **caractérisé en ce que** le capteur optique (1) présente une unité d'exploitation redondante (8).

**18.** Dispositif de protection selon l'une des revendications 1 à 17, **caractérisé en ce que** le véhicule (14) peut être commandé au moyen de la commande (15).

**19.** Dispositif de protection selon l'une des revendications 1 à 18, **caractérisé en ce que** le véhicule (14) est un système de transport sans conducteur.

# Fig. 1

**Fig. 2**

14  15  1  S  2  E  v

**Fig. 3**

S  14'  v  14  17  S  $p(t_0 + \triangle t)$  $p(t_0)$  16  17  E

**EP 1 788 467 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3932344 A1
- DE 19915509 A1
- WO 02082201 A1
- US 6347266 B1
- DE 10113413 A1

**In der Beschreibung aufgeführte Nicht-Patentliteratur**

- An integrated approach to feature based dynamic vision. PROCEEDINGS OF THE CONFERENCE ON COMPUTER VISION AND PATTERN RECOGNITION. ANN ARBOR. INSTITUTE OF ELECTRICAL AND ELETRO-NICS ENGINEERS, 19
- PROCEEDINGS OF THE CONFERENCE ON COMPUTER VISION AND PATTERN RECOGNITION. IEEE COMP. SOC. PRESS, 05. Juni 1988, 820-825